# EUROPEAN PATENT SPECIFICATION

(11) **EP 4 219 961 B1**
(45) Date of publication and mention of the grant of the patent: **04.03.2026**
(21) Application number: 23164099.6
(22) Date of filing: 24.03.2023
(51) Int. Cl.: B60B 35/12, B60B 35/14, B60K 17/36, F16D 1/02, F16D 1/108, F16D 1/10, F16C 3/03, F16C 3/02, B60K 17/22

(54) **DRIVE AXLE SYSTEM, HEAVY-DUTY VEHICLE COMPRISING SUCH A DRIVE AXLE SYSTEM AND METHOD FOR MANUFACTURING SUCH A DRIVE AXLE SYSTEM**
ANTRIEBSACHSENSYSTEM, SCHWERLASTFAHRZEUG MIT EINEM SOLCHEN ANTRIEBSACHSENSYSTEM UND VERFAHREN ZUR HERSTELLUNG EINES SOLCHEN ANTRIEBSACHSENSYSTEMS
SYSTÈME D'ESSIEU MOTEUR, VÉHICULE UTILITAIRE LOURD COMPRENANT UN TEL SYSTÈME D'ESSIEU MOTEUR ET PROCÉDÉ DE FABRICATION D'UN TEL SYSTÈME D'ESSIEU MOTEUR

(43) Date of publication of application: 02.08.2023
(73) Proprietor: Volvo Truck Corporation, 405 08 Göteborg (SE)
(72) Inventor: GURUMALLESHA, Prashanth T, 570017 MYSURU (IN); THALANGE, Vinayak, 560100 BANGALORE (IN)
(74) Representative: Lavoix

(56) References cited:
- CN-A- 108 980 164
- CN-A- 110 049 880
- US-A- 1 999 841
- US-B2- 6 626 765

## Description

### TECHNICAL FIELD

The disclosure relates generally to vehicle drive axles. In particular aspects, the disclosure relates to a drive axle system, a heavy-duty vehicle comprising such a drive axle system and a method for manufacturing such a drive axle system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Heavy-duty vehicles of different models, for example trucks with any type of drivetrains such as 4x2, 6x2, 8x2, 10x2, 6x4, 8x4, all-drive, etc., often have rear or front drive axles where the drive axle shafts are not of the same length from one vehicle to another. In addition to this, in some vehicles, the drive axle shafts are often not of the same length compared to each other, depending on their location in the vehicle. For example, the left drive axle shaft has a different length than the right drive axle shaft. This leads to a large number of different drive axle shafts that need to be produced and kept in stock at all times by manufacturers, which also increases the complexity of manufacturing the vehicles. It also results in complex inventory management, all of this leading to increased costs and delays.

CN110049880A describes a drive axle comprising an axle housing and two drive shafts.

CN108980164A describes a telescopic universal joint. The universal joint comprises a first telescopic shaft and a second telescopic shaft, a part body, connected to the telescopic shafts, length fixing holes, aligned with each other and located on the part body. Finally, the universal joint comprises a length fixing device.

The aim of the present invention is to solve the problems listed above by proposing a drive axle system enabling reduced inventory management and easier manufacturing.

### SUMMARY

According to a first aspect of the disclosure, the invention relates to a drive axle system for a heavy-duty vehicle, comprising at least one drive axle, said at least one drive axle comprising a drive axle housing and at least one drive axle shaft, extending along a shaft axis, the drive axle shaft having a total length measured along the shaft axis. The drive axle shaft comprises a primary half-shaft, extending along the shaft axis and comprising primary radial members and a primary reference hole, extending radially relative to the shaft axis and a secondary half-shaft, extending along the shaft axis and comprising secondary reference holes, offset relative to each other along the shaft axis, each secondary reference hole extending radially relative to the shaft axis, and secondary radial members. The primary and the secondary radial members are received in one another for preventing rotation of the primary half-shaft relative to the secondary half-shaft around the shaft axis, and enabling sliding of the primary half-shaft relative to the secondary half-shaft along the shaft axis, so that the total length is varied and so that, for given positions of the primary half-shaft relative to the secondary half-shaft, the primary reference hole coincides with one of the secondary reference holes. The drive axle shaft further comprises a fastener, inserted into the primary reference hole and into one of the secondary reference holes that coincides with the primary reference hole through which the fastener is inserted, for preventing the sliding of the primary half-shaft relative to the secondary half-shaft and thereby fixing the total length.

The first aspect of the disclosure may seek to propose a single drive axle shaft for which the total length may be adapted during manufacturing of the drive axle system, depending on the required total length for said drive axle shaft. The required total length may vary from one vehicle to another, from one drive axle to another or from one position of the drive axle shaft in the drive axle, but the same axle shaft may be used, since its total length may be varied to the required total length before integration of the axle shaft into the drive axle system. A technical benefit may include that sliding of primary and secondary half-shafts relative to each other allows for the total length of the drive axle shaft to be modified to the required total length, and then said total length may be fixed with the fastener. This may eliminate the need for a specific drive axle shaft for a specific position, axle or vehicle. The use of primary and secondary members ensure that the primary and secondary half-shafts do not rotate around each other, and that the drive shaft is adapted to transmit torque properly. The total length is fixed by the fastener, thus making sure that the total length of the drive axle shaft stays constant and ensuring safe use of the drive axle shaft.

In some examples, including in at least one preferred example, optionally:
- the primary half-shaft comprises at least one primary auxiliary hole;
- for each secondary reference hole, the secondary half-shaft comprises as many secondary auxiliary holes as the primary half-shaft comprises primary auxiliary holes;
- each primary auxiliary hole and secondary auxiliary hole is arranged so that, when the primary reference hole coincides with one of the secondary reference hole, each of the primary auxiliary holes is configured to coincide with one of the secondary auxiliary holes; and
- the drive axle shaft comprises a respective auxiliary fastener for each primary auxiliary hole, each auxiliary fastener being inserted through one of the primary auxiliary holes and through one of the secondary auxiliary holes coinciding with the primary auxiliary hole through which the auxiliary fastener is inserted, for further preventing the sliding of the primary half-shaft relative to the secondary half-shaft and thereby fixing the total length.

A technical benefit may include better fixation of the primary and the secondary half-shafts to each other, thus more reliably preventing their sliding along the shaft axis relative to each other.

In some examples, including in at least one preferred example, optionally the primary half-shaft has only one primary reference hole. A technical benefit may include easier fabrication of the primary half-shaft.

In some examples, including in at least one preferred example, optionally the primary radial members are a plurality of primary splines and the secondary radial members are a plurality of secondary splines, having a complementary shape to the primary splines, the primary and secondary splines extending along the shaft axis and interlocking to prevent rotation of the primary half-shaft relative to the secondary half-shaft around the shaft axis while enabling sliding of the primary half-shaft relative to the secondary half-shaft along the shaft axis. A technical benefit may include simple fabrication while ensuring that the rotation of the two half-shafts relative to each other is effectively prevented.

In some examples, including in at least one preferred example, optionally the drive axle system comprises a plurality of drive axle shafts, wherein the primary half-shafts of the drive axle shafts are identical to one another, and wherein the secondary half-shafts of the drive axle shafts are identical to one another. A technical benefit may include the reduction of the number of different parts used for the drive axle system, as identical parts are used for the drive axle shafts.

In some examples, including in at least one preferred example, optionally each drive axle shaft has as many secondary reference holes as the drive axle system has drive axle shafts. A technical benefit may include having as many different total lengths available as there are drive axle shafts.

In some examples, including in at least one preferred example, optionally for each drive axle shaft the primary reference hole coincides with one of the secondary reference holes and the position of the primary half-shaft relative to the secondary half-shaft is different for each drive axle shaft, such that the total length of each drive axle shaft is different. A technical benefit may include being able to fix a total length that is different for each drive axle shaft.

In some examples, including in at least one preferred example, optionally the primary half shaft is a male half-shaft having an exterior surface forming the primary radial members and the secondary half-shaft is a female half-shaft, an inside surface of the female half-shaft delimiting a hollow portion extending along the female half-shaft, the inside surface forming the secondary radial members and receiving the exterior surface. A technical benefit may include easier assembly and safer operation of the drive axle shaft.

In some examples, including in at least one preferred example, optionally the fastener is a dowel pin, press-fitted into the primary reference hole and coinciding secondary reference hole through which said fastener is inserted. A technical benefit may include irreversible, and thus safer fixation of the primary and secondary half-shafts.

In some examples, including in at least one preferred example, optionally the drive axle system is a rear and/or front drive axle system. A technical benefit may include easier manufacturing of the drive axle system, by providing parts that have to be adapted for use with only a rear drive axle system.

In some examples, including in at least one preferred example, optionally the drive axle system further comprises two drive axles for forming a tandem rear drive axle system. A technical benefit may include easier integration in heavy-duty vehicles, such as trucks, designed with tandem drive axle systems.

In some examples, including in at least one preferred example, optionally each drive axle further comprises a differential, adapted to be driven by a drive shaft, wherein each drive axle shaft comprises a differential gear end, the differential driving the drive axle shaft in rotation around the shaft axis, relative to the drive axle housing, via the differential gear end; and a wheel hub assembly. The wheel hub assembly is adapted to drive a drive in rotation around the shaft axis relative to the drive axle housing, wherein each drive axle shaft further comprises a wheel hub end, the drive axle shaft driving the wheel hub assembly in rotation around the shaft axis, relative to the drive axle housing, via the wheel hub end, the primary and secondary half-shafts connecting the wheel hub end with the differential gear end. A technical benefit may include having a drive axle system similar to already existing drive axle systems, thus enabling integration of the drive axle system to the heavy-duty vehicle manufacturing process and operation of the drive axle system when in use in a similar way to the already existing drive axle systems.

In some examples, including in at least one preferred example, optionally the primary auxiliary holes and the primary reference holes have an identical size. A technical benefit may include easier manufacturing of the primary half-shaft as well as enabling the use of identical fasteners. For example, "identical size" may include that, if the holes are circular, the holes have the same diameter.

In some examples, including in at least one preferred example, optionally the secondary auxiliary holes and the secondary reference holes have an identical size. A technical benefit may include easier manufacturing of the secondary half-shaft as well as enabling the use of identical fasteners. For example, "identical size" may include that, if the holes are circular, the holes have the same diameter.

In some examples, including in at least one preferred example, optionally the primary auxiliary holes are arranged in a plane comprising the shaft axis. A technical benefit may include easier manufacturing of the half shafts and easier assembly of the half-shafts together to form the drive axle shaft while still reliably preventing sliding of the primary and secondary half-shafts relative to each other.

According to a second aspect of the disclosure the invention further relates to a heavy-duty vehicle, comprising a drive axle system according to any of the previously described examples. The second aspect of the disclosure may seek to propose a heavy-duty vehicle, such as a truck, with a drive axle shaft that can be used in different drive axle shaft positions when manufacturing the heavy-duty vehicle. A technical benefit may include the simpler manufacturing of the heavy-duty vehicle.

According to a third aspect of the disclosure the invention further relates to a method for manufacturing a drive axle system according to any of the previously described examples, comprising sliding the primary half-shaft relative to the secondary half-shaft along the shaft axis, until the primary reference hole coincides with one of the secondary reference holes and the desired total length is achieved and inserting the fastener into the primary reference hole and the coinciding secondary reference hole to fix the achieved total length. The third aspect of the disclosure may seek to propose a method to manufacture a drive axle system with a drive axle shaft that can be used in different drive axle shaft positions. A technical benefit may include obtaining the desired total length of the drive axle shaft easily while still ensuring that the drive axle system is safe to use in a heavy-duty vehicle, such as a truck.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary view of a heavy-duty vehicle with a tandem rear drive axle system according to an example.
**FIG. 2** is an exemplary perspective view of the tandem rear drive axle system of **FIG. 1****.**
**FIG. 3** is an exemplary cross sectional view of the example in **FIG. 2****.**
**FIG.** 4 is an exploded view of a drive axle shaft, belonging to the tandem rear drive axle system of the example in **FIG. 3****.**
**FIG. 5** is a cross sectional view of the drive axle shaft in **FIG. 4****.**
**FIG. 6** is a cross sectional view of two drive axle shafts identical to the drive axle shaft in **FIG. 4****,** where half-shafts are positioned so as to obtain two different total lengths.

### DETAILED DESCRIPTION

The detailed description set forth below provides information and examples of the disclosed technology with sufficient detail to enable those skilled in the art to practice the disclosure.

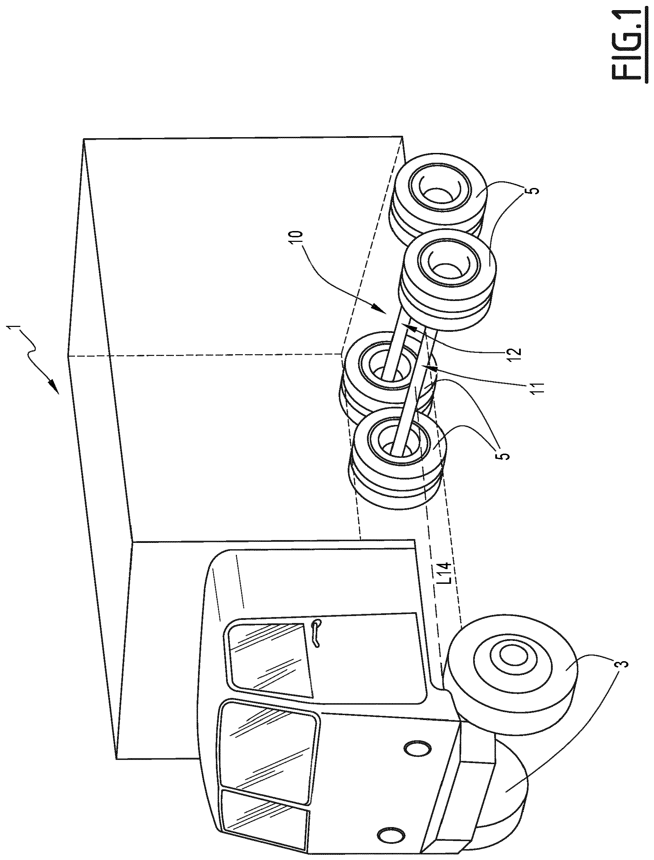

**FIG. 1** is an exemplary truck 1, comprising two front wheel assemblies 3 and four rear wheel assemblies 5 and a tandem rear drive axle system axle 10. The truck 1 is a particular type of heavy-duty vehicle, but the disclosure is not limited to this type of truck and may be applied to heavy-duty vehicles with different drivetrains, such as 4x2, 6x2, 8x2, 10x2, 6x4, 10x2, 6x4, 8x4, all drive, etc. In this example, the front wheel assemblies 3 are single wheel assemblies, and the rear wheel assemblies 5 are dual wheel assemblies. The tandem rear drive axle system 10 comprises two drive axles 11 and 12. Each drive axle 11 and 12 is configured to drive two of the rear wheel assemblies 5. The tandem rear drive axle system 10 may alternatively be a tandem front drive axle system, a simple front, and/or rear drive axle system, comprising only one drive axle and configured to drive only two rear wheel assemblies 5, or a front and/or rear drive axle system comprising more than two drive axles and configured for driving more than four rear wheel assemblies 5.

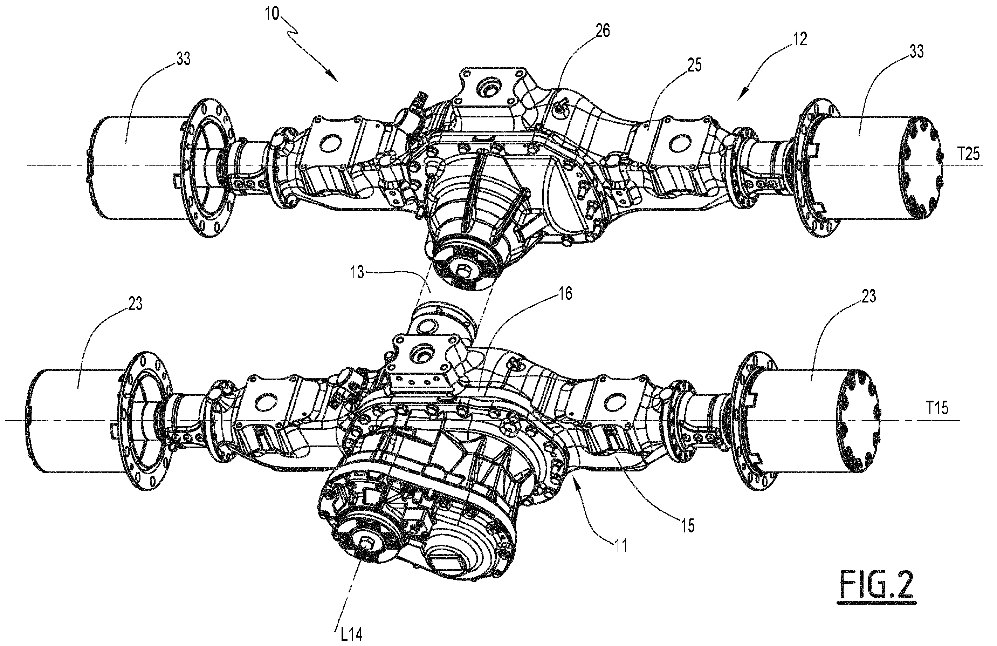

One of the drive axles, for example the drive axle 11, may be connected to a longitudinal drive shaft, represented by the axis L14, and transmits the torque of the drive shaft to the rear wheel assemblies 5. The drive axles 11 and 12 may be connected to each other via a linking shaft 13, visible in stippled lines on **FIG. 2****.** In this case, the torque of the drive shaft is split between the drive axle 11 and the drive axle 12: part of the torque is transmitted from the drive shaft to the drive axle 11 and the remaining torque is transmitted to the drive axle 12.

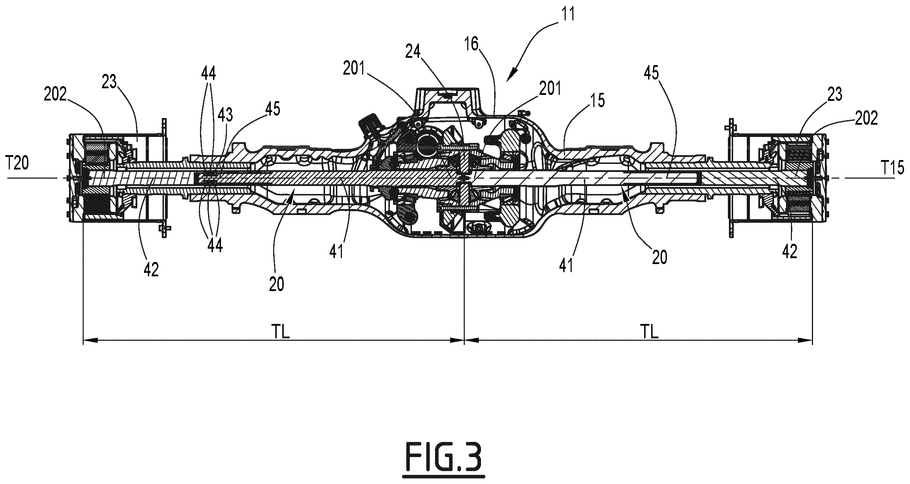

As shown in **FIG. 2** and **3****,** the drive axle 11 comprises a drive axle housing 15, two drive axle shafts 20, two wheel hubs 23 and a differential 24. The drive axle housing 15 extends along a transverse axis T15, and comprises a main housing 16, located close to, but not at a centre of the drive axle housing 15, and which houses the differential 24. The drive axle housing 15 is located between the two wheel hubs 23, which are aligned with the transverse axis T15. Two rear wheel assemblies 5 are attached to the two wheel hubs 23, one rear wheel assembly 5 per wheel hub 23.

The drive axle 12 comprises the same elements as the drive axle 11, more specifically a drive axle housing 25, two wheel hubs 33, two drive axle shafts and a differential. The drive axle housing 25 extends along a transverse axis T25, and comprises a main housing 26, located close to but not at a centre of the drive axle housing 25, and which houses the differential. The drive axle housing 25 is located between the two wheel hubs 33, which are aligned with the transverse axis T25. Two rear wheel assemblies 5 are attached to the two wheel hubs 33, one rear wheel assembly 5 per wheel hub 33.

The following description will focus on the drive axle 11, and unless said otherwise, the description of drive axle 11 may be applied to drive axle 12.

Each drive axle shaft 20 extends along a respective shaft axis T20. Each drive shaft 20 is partially housed in the drive axle housing 15 and extends away from the main housing 16 and into the wheel hub 23. When the drive axle shaft 20 is partially housed in the drive axle housing 15, the shaft axis T20 is parallel to the transverse axis T15. Each drive axle shaft 20 has a total length TL, measured along the shaft axis T20, which may be identical or different for the two drive axle shafts 20 shown in **FIG.3****,** depending on a distance to be achieved, measured along the shaft axis T20, between the wheel hub 23 and the differential 24. Indeed, the distance between the differential 24 and each wheel hub 23 is constant, however, the distance between the differential and one wheel hub 23 may be different from the distance between the differential and the other wheel hub 23, in particular if the shafts 20 are of different total lengths TL.

The drive axle shaft 20 comprises a differential gear end 201 and a wheel hub end 202. The differential gear end 201 is coupled to the differential 24, so that the differential 24 may drive the shaft 20 in rotation around the shaft axis T20 relative to the drive axle housing 15. The differential gear end 201 may have a shape adapted to connect the differential gear end 201 to the differential 24 and allows the differential 24 to drive optimally the shaft 20 in rotation, such as splines complementary to other splines present on the differential 24. The wheel hub end 202 is connected to the wheel hub 23, to drive the wheel hub 23 in rotation along the shaft axis T20. The rear wheel assemblies 5 are then driven in rotation by the wheel hub 23 along the shaft axis T20.

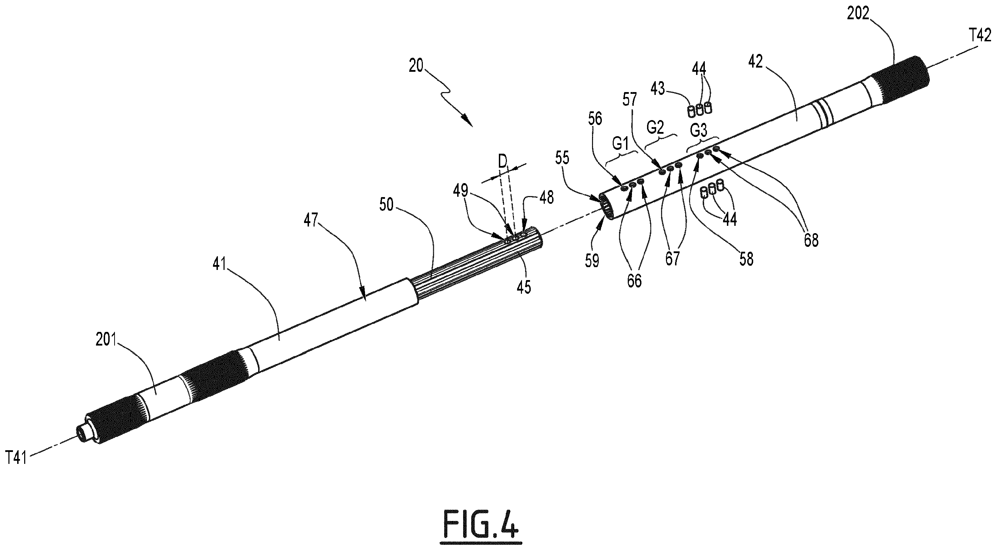

The drive axle shaft 20 is shown in greater detail in **FIGS. 4** to **6****.** The drive axle shaft 20 comprises a primary half-shaft 41 extending along a primary half-shaft axis T41, a secondary half-shaft 42 extending along a secondary half-shaft axis T42, a fastener 43 and may comprise auxiliary fasteners 44.

The primary half-shaft 41, as shown in **FIGS. 4** to **6** is a male half-shaft and comprises a connecting end 45, an exterior surface 47, a primary reference hole 48 and primary auxiliary holes 49. The differential gear end 201 is formed on the primary half-shaft 41 and connects the differential 24 to the shaft 20. The connecting end 45 connects the primary half-shaft 41 to the secondary half shaft 42.

The exterior surface 47 forms primary radial members 50. In the examples shown in **FIGS. 4** to **6****,** the primary radial members 50 are multiple primary splines. The primary splines comprise multiple alternating grooves and protrusions, extending parallel to the primary half-shaft axis T41. The primary splines are formed only on a portion of the exterior surface 47, and ring the primary half-shaft 41. Alternatively, the primary splines may extend on the entire exterior surface 47, or may be positioned to form only a partial ring around the primary half-shaft 41.

The primary reference hole 48 is a blind hole located on the connecting end 45 of primary half-shaft 41 and extending perpendicularly to the primary half-shaft axis T41. In other examples not shown, the primary half-shaft 41 may comprise more than one primary reference hole 48.

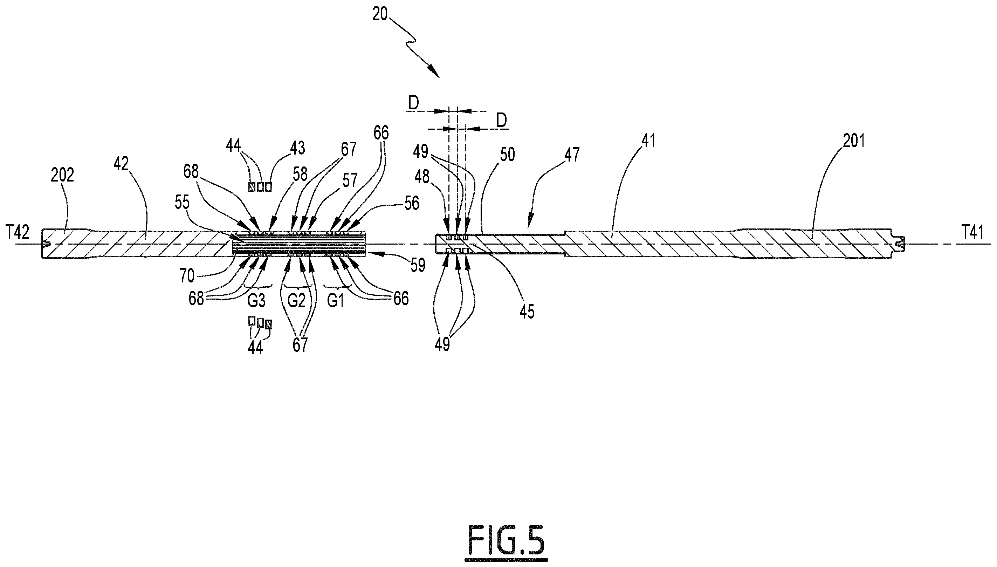

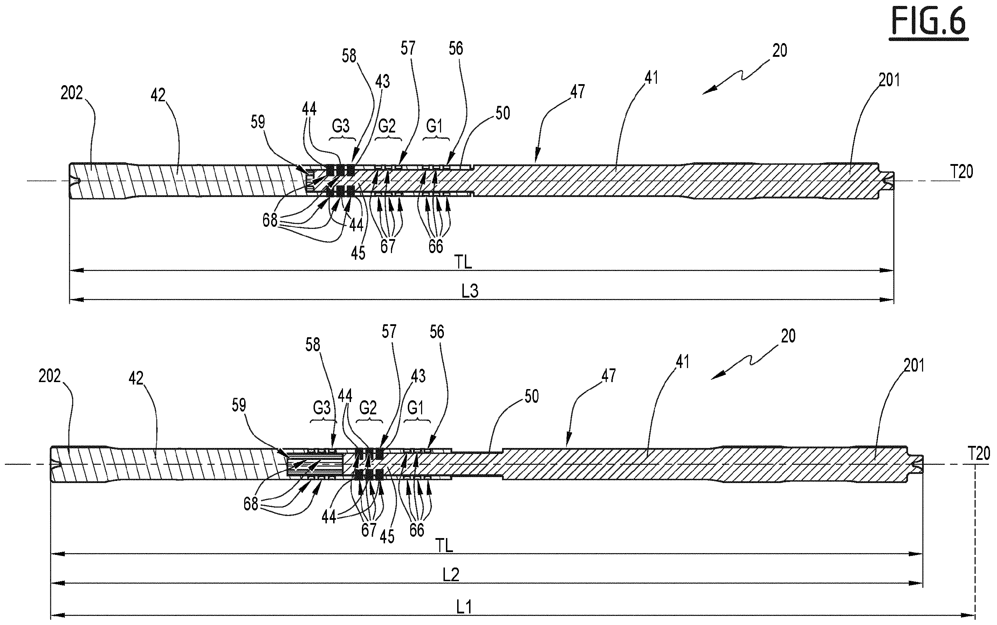

The primary auxiliary holes 49 are blind holes on the connecting end 45 of the primary half-shaft 41 extending perpendicularly to the primary half-shaft axis T41. The primary half-shaft 41 comprises five primary auxiliary holes 49, partially visible in **FIG. 4** and fully visible in **FIGS. 5** and **6****.** The primary half-shaft 41 may comprise more or less than the five primary auxiliary holes 49. As shown in **FIG. 4****,** the primary auxiliary holes 49 may be arranged along a plane comprising the primary half-shaft axis T41, and may be diametrically opposed to each other relative to the primary half-shaft 41 while arranged along the plane. Two adjacent primary auxiliary holes 49 may be separated by an identical distance interval D, measured along the primary half-shaft axis 41. The primary reference hole 48 may also be arranged along the plane, as shown in figures 4 to 6 and the primary reference hole 48 and may be separated from one of the primary auxiliary holes 49 by the distance interval D. The primary reference hole 48 and the primary auxiliary holes 49 may have the same size, in other words, a cross section of each hole, relative to a plane containing the primary reference and auxiliary holes 48 and 49 is identical for each primary reference hole and auxiliary hole 48 and 49. In particular, if the primary reference hole 48 and the primary auxiliary holes 49 are circular, the primary reference and auxiliary holes 48 and 49 have an identical diameter.

In other examples, not shown, the primary reference hole 48 or primary reference holes and/or the primary auxiliary holes 49 may be through holes.

The secondary half-shaft 42 is a female half-shaft and comprises an interior surface 55, secondary reference holes 56, 57, 58 and secondary auxiliary holes 66, 67, 68. According to other examples not shown, the secondary half-shaft may not comprise secondary auxiliary holes 66, 67, 68. The wheel hub end 202 is formed on the secondary half-shaft 42 and connects the wheel hub 23 to the drive axle shaft 20.

**FIG. 5** shows that the interior surface 55 delimits a hollow portion 59 of the secondary half-shaft and forms secondary radial members 70. The hollow portion 59 extends along the secondary half-shaft axis T42. A length of the hollow portion 59, measured along the secondary half-shaft axis T42 may be smaller than a length of the secondary half-shaft, measured along the secondary half-shaft axis T42. The hollow portion 59 is adapted to receive the connecting end 45 of the primary half-shaft 41, thus connecting both half-shafts 41 and 42 together.

In the example shown in **FIG. 5****,** the secondary radial members 70 are multiple secondary splines. The secondary splines comprise multiple alternating grooves and protrusions, extending parallel to the secondary half-shaft axis T42. The secondary splines are arranged to form a ring around the secondary half-shaft axis T42. Alternatively, the secondary splines may be positioned to form only a partial ring around the secondary half-shaft axis T42. The secondary radial members 70 are complementary to the primary radial members 50.

The secondary reference holes 56, 57 and 58 are through holes located on the secondary half-shaft 42 and extending radially to the secondary half-shaft axis T42, opening on the interior surface 55. As shown in **FIGS. 4** to **6****,** the secondary half-shaft 42 has three secondary reference holes 56, 57 and 58. In other examples not shown, the secondary half-shaft 42 may comprise more than three secondary reference holes, and at least two secondary reference holes. The secondary reference holes 56, 57 and 58 are offset relative to each other along the secondary half-shaft axis T42, and are preferably aligned parallel to the secondary half-shaft axis T42.

The secondary auxiliary holes 66, 67 and 68 are through holes on the secondary half-shaft 42 extending radially to the secondary half-shaft axis T42 and opening on the interior surface 55. The secondary half-shaft 42 may comprise, for each secondary reference hole 56, 57 and 58, as many secondary auxiliary holes 66, 67 and 68 as the primary auxiliary holes 49 in the primary half-shaft 41. In other words, there are as many secondary auxiliary holes 66 as there are primary auxiliary holes 49, as many secondary auxiliary holes 67 as there are primary auxiliary holes 49 and as many secondary auxiliary holes 68 as there are primary auxiliary holes 49. In the example shown in the **FIGS. 5** and **6****,** there are five secondary auxiliary holes 66, five secondary auxiliary holes 67 and five secondary auxiliary holes 68. For each secondary reference hole 56, 57, 58, the secondary half-shaft 42 may comprise more or less secondary auxiliary holes 66, 67 and 68 than previously described. The number of auxiliary holes 66, 67 and 68 may also be unequal.

The secondary reference holes 56, 57, 58 and the secondary auxiliary holes 66, 67, 68 may have the same size. In other words, a cross section of each hole, relative to a plane containing the secondary reference and auxiliary holes 56, 57, 58 and 66, 67, 68 is identical for each secondary reference and auxiliary holes 56, 57, 58 and 66, 67, 68. In particular, if the secondary reference and primary auxiliary holes 56, 57, 58 and 66, 67, 68 are circular, the secondary reference and auxiliary holes 56, 57. 58 and 66, 67, 68 have an identical diameter.

The secondary reference and auxiliary holes 56, 57, 58 and 66, 67, 68 may be grouped. **FIGS. 4** to **6** show the secondary reference and auxiliary holes 56 and 66 forming a first group G1, the secondary reference and auxiliary holes 57 and 67 forming a second group G2 and the secondary reference and auxiliary holes 58 and 68 forming a third group G3. The groups G1, G2 and G3 may be offset one relative to the other by an offset distance measured along the secondary half-shaft axis T42 that is greater than a distance between the secondary reference and auxiliary holes within one group, measured along the secondary half-shaft axis T42.

**FIG. 6** shows an assembled drive axle shaft 20. When the drive axle shaft 20 is assembled, the drive axle shaft 20 has the total length TL, and the shaft axis T20, the primary half-shaft axis T41 and the secondary half-shaft axis T42 coincide. In addition to this, the primary and secondary half-shafts 41 and 42 are received in one another, more specifically the connecting end 45 is received in the hollow portion 59. In the example shown on **FIG. 6****,** the primary half-shaft 41 is received in the secondary half-shaft 42. The primary radial member 50, in the form of primary splines and the secondary radial members 70, in the form of secondary splines are also received in one another, and their interaction blocks a rotation of the primary and secondary half-shafts 41 and 42 relative to each other around the shaft axis T20 while allowing a sliding of the primary and secondary half-shafts 41 and 42 relative to each other along the shaft axis T20.

In other examples not shown, the primary radial members 50 and secondary radial members 70 and are not primary and secondary splines. Instead, the primary and secondary radial members 50 and 70 are another type of member configured for preventing the rotation of the primary half-shaft 41 relative to the secondary half-shafts 42 around the shaft axis T20 while allowing sliding of the primary and secondary half-shafts 41 and 42 relative to each other along the shaft axis T20.

The sliding of the primary half-shaft 41 relative to the secondary half-shaft 42 along the shaft axis T20 enables to modify the total length TL of the drive axle shaft 20. The total length TL of the drive axle shaft 20 may in particular be set to a position where the primary reference hole 48 coincides with one of the secondary reference holes 56, 57 or 58. If the primary reference hole 48 coincides with the secondary reference hole 56, then the total length TL is equal to a length L1, if the primary reference hole 48 coincides with the secondary reference hole 57, then the total length TL is equal to a length L2 and if the primary reference hole 48 coincides with the secondary reference hole 58, then the total length TL is equal to a length L3. When the primary reference hole 48 coincides with one of the secondary reference holes 56, 57 or 58, the primary auxiliary holes 49 may coincide with secondary auxiliary holes 66, 67 and 68. In particular, and as shown in **FIG. 6****,** the primary auxiliary holes 49 coincide with the secondary auxiliary holes 66, 67 or 68 corresponding to the group G1, G2 or G3 to which the secondary reference hole 56, 57 or 58 coinciding with the primary reference hole 48 belongs. For example, as shown on the top of **FIG. 6****,** the primary reference hole 48 may coincide with the secondary reference hole 58 and the primary auxiliary holes 49 coincide with the secondary auxiliary holes 68, the secondary reference and auxiliary holes 58 and 68 belonging to the same group G3.

The offset distance between the groups G1, G2 and G3 may be equal to a length variation between the different lengths L1, L2 and L3 available to the drive axle shaft 20. For example, the offset distance between G1 and G2 may be equal to the length variation between L1 and L2.

The fastener 43 is inserted into the coinciding primary and secondary reference holes, for example, the primary reference hole 48 and the secondary reference hole 58, as shown at the top of **FIG. 6****.** The fastener 43 blocks the sliding of the primary and secondary half-shafts 41 and 42 relative to each other along the shaft axis T20, and thus fixes the total length TL of the shaft 20. In the example of the top of **FIG. 6****,** the total length TL is equal to the length L3. Auxiliary fasteners 44 may be inserted into the coinciding primary and secondary auxiliary holes, for example primary auxiliary holes 49 and secondary auxiliary holes 68. The auxiliary fasteners 44 reinforce the blocking effect of the fastener 43. The fastener 43 and auxiliary fasteners 44 may be dowel pins, press-fitted into the coinciding primary and secondary reference or auxiliary holes 48, 49, 56 to 58 and 66 to 68, and cannot be easily removed once they are inserted into holes.

The bottom of **FIG. 6** shows the shaft 20, wherein the primary reference hole 48 coincides with the secondary reference hole 57, and the primary auxiliary holes 49 coincide with the secondary auxiliary holes 67, the secondary reference hole 57 and secondary auxiliary holes 67 all belonging to the group G2. The fastener 43 is inserted into the primary reference hole 48 and the secondary reference hole 57, and the auxiliary fasteners 44 are inserted into the primary auxiliary holes 49 and into the secondary auxiliary holes 67. Thus the total length TL is equal to the length L2.

In other examples not represented, the drive axle system may have multiple drive axle shafts, wherein the primary half-shafts are all identical to each other and the secondary half-shafts are all identical to each other, but the total length differs for at least one of the drive axle shafts. In particular, each drive axle shaft may have a different total length. This would be implemented by having secondary drive axle shafts with at least as many secondary reference holes as there are drive axle shafts in the drive axle system. For example, four drive axle shafts may have four different total lengths, and every secondary axle shaft has four secondary reference holes. Such a configuration may prove advantageous in situations where for one drive axle in a drive axle system, the drive axle shafts need to have a different total length , for example because the drive axle is not centered along the drive axle. In addition to this, for a same drive axle system, a wheel track of each drive axle may be different, thus resulting in four different total length of the drive axle shafts. Similarly, for different vehicles, the wheel track of each drive axle may be different, thus resulting in different total length TL of the drive axle shafts for different vehicles.

In other examples not shown, the drive axle shaft does not comprise auxiliary fasteners, the primary half-shaft does not comprise auxiliary primary holes and the secondary half-shaft does not comprise auxiliary secondary holes.

In other examples not shown, the primary half-shaft may be the female half-shaft, or be of a different shape. Similarly, the secondary half-shaft may be a male half-shaft, or be of a different shape.

In other examples not shown, the wheel hub end may be formed on the primary half-shaft 41 and the differential gear end on the secondary half-shaft.

A method for assembling the tandem rear drive axle system 10 is described below. A first step of the method is sliding the primary half shaft 41 relative to the secondary half-shaft 42, along the shaft axis T20. The sliding is stopped when the primary reference hole 48 coincides with one of the secondary reference holes 56, 57, 58. The secondary reference hole 56, 57, 58 that is chosen to coincide with the primary reference hole 48 depends on the desired total length TL. For example, to achieve a total length TL equal to T3, the primary shaft 41 slides relative to the secondary half-shaft 42, along the shaft axis T20, until the primary reference hole 48 coincides with the secondary reference hole 58. Primary and secondary auxiliary holes may also coincide, such as primary auxiliary holes 49 and secondary auxiliary holes 68 as shown at the top of **FIG. 6****.** A second step of the method is inserting the fastener 43 into the coinciding primary and secondary reference holes 48 and 58, thus fixing the total length TL. Auxiliary fasteners 44 may be inserted into coinciding primary and secondary auxiliary holes, such as primary auxiliary holes 49 and secondary auxiliary holes 68. A third step may be inserting the first drive axle shaft 20 thus assembled into the drive axle housing 15 and connecting the drive axle shaft 20 to the differential 24 through its differential gear end 201. A fourth step may be connecting the wheel hub 23 to the drive axle shaft 20 through its wheel hub end 202. A fifth step may be to assemble a second drive axle shaft 20, such that the two drive axle shafts 20 have a different total lengths TL. A sixth step may be to insert the second axle shaft 20 into the drive axle housing 15 or into the drive axle housing 25. In the first case the second drive axle shaft 20 faces the first drive axle shaft 20 along the drive axle housing axis T15 and is connected to the differential 24 and to the other wheel hub 23, respectively through its differential gear end 201 and wheel hub end 202. In the second case, the second drive axle shaft 20 is connected to the differential inside the drive axle housing 25 and to one of the two wheel hubs 33, respectively through its differential gear end 201 and wheel hub end 202. The respective positions of the two drive axle shafts 20 depend on the length that needs to be achieved between the differentials and the wheel hubs 23 and 33. This method is not limited to the tandem rear drive axle system 10 described and may be applied to a tandem front drive axle system, a front and/or rear simple drive axle system or a front and/or rear drive axle system comprising more than two drive axles.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the invention is defined by the following claims.

## Claims

1. A drive axle system (10) for a heavy-duty vehicle (1), comprising at least one drive axle (11; 12), said at least one drive axle (11; 12) comprising a drive axle housing (15; 25) and at least one drive axle shaft (20), extending along a shaft axis (T20), the drive axle shaft (20) having a total length (TL) measured along the shaft axis (T20), **characterized in that** the drive axle shaft (20) comprises:
- a primary half-shaft (41), extending along the shaft axis (T20) and comprising primary radial members (50) and a primary reference hole (48), extending radially relative to the shaft axis;
- a secondary half-shaft (42), extending along the shaft axis (T20) and comprising:
∘ secondary reference holes (56, 57, 58), offset relative to each other along the shaft axis (T20), each secondary reference hole (56, 57, 58) extending radially relative to the shaft axis (T20), and
∘ secondary radial members (70), the primary and the secondary radial members (50, 70) being received in one another for:
▪ preventing rotation of the primary half-shaft (41) relative to the secondary half-shaft (42) around the shaft axis (T20), and
▪ enabling sliding of the primary half-shaft (41) relative to the secondary half-shaft (42) along the shaft axis (T20), so that the total length (TL) is varied and so that, for given positions of the primary half-shaft (41) relative to the secondary half-shaft (42), the primary reference hole (48) coincides with one of the secondary reference holes (56; 57; 58), and
- a fastener (43), inserted into the primary reference hole (48) and into one of the secondary reference holes (56, 57, 58) that coincides with the primary reference hole (48) through which the fastener (44) is inserted, for preventing the sliding of the primary half-shaft (41) relative to the secondary half-shaft (42) and thereby fixing the total length (TL).

2. The drive axle system (10) according to claim 1, wherein:
- the primary half-shaft (41) comprises at least one primary auxiliary hole (49);
- for each secondary reference hole (56, 57, 58), the secondary half-shaft (42) comprises as many secondary auxiliary holes (66, 67, 68) as the primary half-shaft (41) comprises primary auxiliary holes (49);
- each primary auxiliary hole (49) and secondary auxiliary hole (66, 67, 68) is arranged so that, when the primary reference hole (48) coincides with one of the secondary reference hole (66; 67; 68), each of the primary auxiliary holes (49) is configured to coincide with one of the secondary auxiliary holes (66, 67, 68); and
- the drive axle shaft (20) comprises a respective auxiliary fastener (44) for each primary auxiliary hole (49), each auxiliary fastener (44) being inserted through one of the primary auxiliary holes (49) and through one of the secondary auxiliary holes (66, 67, 68) coinciding with the primary auxiliary hole (49) through which the auxiliary fastener (44) is inserted, for further preventing the sliding of the primary half-shaft (41) relative to the secondary half-shaft (42) and thereby fixing the total length (TL).

3. The drive axle system (10) according to any of the claims 1 and 2, wherein the primary half-shaft (41) has only one primary reference hole (48).

4. The drive axle system (10) according to any of the claims 1 to 3, wherein the primary radial members (50) are a plurality of primary splines and the secondary radial members (70) are a plurality of secondary splines, having a complementary shape to the primary splines, the primary and secondary splines extending along the shaft axis (T20) and interlocking to prevent rotation of the primary half-shaft (41) relative to the secondary half-shaft (42) around the shaft axis (T20) while enabling sliding of the primary half-shaft (41) relative to the secondary half-shaft (42) along the shaft axis.

5. The drive axle system (10) according to any of the claims 1 to 4, comprising a plurality of drive axle shafts (20), wherein the primary half-shafts (41) of the drive axle shafts (20) are identical to one another, and wherein the secondary half-shafts (42) of the drive axle shafts (20) are identical to one another.

6. The drive axle system (10) according to claim 5, wherein each drive axle shaft (20) has as many secondary reference holes (56, 57, 58) as the drive axle system (10) has drive axle shafts (20).

7. The drive axle system (10) according to any of the claim 5 and 6, wherein, for each drive axle shaft (20):
- the primary reference hole (48) coincides with one of the secondary reference holes (56, 57, 58); and
- the position of the primary half-shaft (41) relative to the secondary half-shaft (42) is different for each drive axle shaft (20), such that the total length (TL) of each drive axle shaft (20) is different.

8. The drive axle system (10) according to any of the claims 1 to 7, wherein the primary half shaft (41) is a male half-shaft having an exterior surface (47) forming the primary radial members (50) and the secondary half-shaft (42) is a female half-shaft, an inside surface (55) of the female half-shaft delimiting a hollow portion (59) extending along the female half-shaft, the inside surface (55) forming the secondary radial members (70) and receiving the exterior surface (47).

9. The drive axle system (10) according to any of the claims 1 to 8, wherein the fastener (44) is a dowel pin, press-fitted into the primary reference hole (48) and coinciding secondary reference hole (56, 57, 58) through which said fastener (44) is inserted.

10. The drive axle system (10) according to any of the claims 1 to 9, wherein the drive axle system (10) is a rear and/or a front drive axle system (10).

11. The drive axle system (10) according to any of the claims 1 to 10, further comprising two drive axles (11, 12) for forming a tandem rear drive axle system (10).

12. The drive axle system (10) according to any of the claims 1 to 11, wherein each drive axle (11, 12) further comprises:
- a differential (24), adapted to be driven by a drive shaft, wherein each drive axle shaft (20) comprises a differential gear end (201), the differential (24) driving the drive axle shaft (20) in rotation around the shaft axis (T20), relative to the drive axle housing (15; 25), via the differential gear end (201); and
- a wheel hub assembly (23, 33), adapted to drive a drive (5) in rotation around the shaft axis (T20) relative to the drive axle housing (15, 25), wherein each drive axle shaft (20) further comprises a wheel hub end (202), the drive axle shaft (20) driving the wheel hub assembly (23, 33) in rotation around the shaft axis (T20), relative to the drive axle housing (15, 25), via the wheel hub end (202), the primary and secondary half-shafts (41, 42) connecting the wheel hub end (202) with the differential gear end (201).

13. The drive axle system (10) according to claim 2, wherein the primary auxiliary holes (49) are arranged in a plane comprising the shaft axis (T20).

14. A heavy-duty vehicle (1), comprising a drive axle system (10) according to any of the claims 1 to 13.

15. A method for manufacturing a drive axle system (10) according to any of the claims 1 to 13, comprising:
- sliding the primary half-shaft (41) relative to the secondary half-shaft (42) along the shaft axis (T20), until the primary reference hole (48) coincides with one of the secondary reference holes (56, 57, 58) and the desired total length (TL) is achieved; and
- inserting the fastener (44) into the primary reference hole (48) and the coinciding secondary reference hole (56, 57, 58) to fix the achieved total length (TL).

## Patentansprüche

1. Antriebsachssystem (10) für ein Schwerlastfahrzeug (1), umfassend mindestens eine Antriebsachse (11; 12), wobei die mindestens eine Antriebsachse (11; 12) ein Antriebsachsgehäuse (15; 25) und mindestens eine Antriebsachswelle (20) umfasst, die sich entlang einer Wellenachse (T20) erstreckt, wobei die Antriebsachswelle (20) eine entlang der Wellenachse (T20) gemessene Gesamtlänge (TL) aufweist, **dadurch gekennzeichnet, dass** die Antriebsachswelle (20) Folgendes umfasst:
- eine primäre Halbwelle (41), die sich entlang der Wellenachse (T20) erstreckt und primäre radiale Elemente (50) und ein primäres Referenzloch (48) aufweist, das sich radial relativ zur Wellenachse erstreckt;
- eine sekundäre Halbwelle (42), die sich entlang der Wellenachse (T20) erstreckt und Folgendes umfasst:
∘ sekundäre Referenzlöcher (56, 57, 58), die relativ zueinander entlang der Wellenachse (T20) versetzt sind, wobei sich jedes sekundäre Referenzloch (56, 57, 58) radial relativ zur Wellenachse (T20) erstreckt, und
∘ sekundäre radiale Elemente (70), wobei die primären und sekundären radialen Elemente (50, 70) ineinandergreifen, um:
▪ eine Drehung der primären Halbwelle (41) relativ zur sekundären Halbwelle (42) um die Wellenachse (T20) zu verhindern, und
▪ ein Gleiten der primären Halbwelle (41) relativ zur sekundären Halbwelle (42) entlang der Wellenachse (T20) zu ermöglichen, sodass die Gesamtlänge (TL) variiert wird und sodass, bei gegebenen Positionen der primären Halbwelle (41) relativ zur sekundären Halbwelle (42), das primäre Referenzloch (48) mit einem der sekundären Referenzlöcher (56; 57; 58) übereinstimmt, und
- ein Befestigungselement (43), das in das primäre Referenzloch (48) und in eines der sekundären Referenzlöcher (56, 57, 58) eingesetzt wird, das mit dem primären Referenzloch (48) übereinstimmt, durch das das Befestigungselement (44) eingesetzt wird, um ein Gleiten der primären Halbwelle (41) relativ zur sekundären Halbwelle (42) zu verhindern und dadurch die Gesamtlänge (TL) zu fixieren.

2. Antriebsachssystem (10) nach Anspruch 1, wobei:
- die primäre Halbwelle (41) mindestens ein primäres Hilfsloch (49) aufweist;
- die sekundäre Halbwelle (42) für jedes sekundäre Referenzloch (56, 57, 58) ebenso viele sekundäre Hilfslöcher (66, 67, 68) umfasst, wie die primäre Halbwelle (41) primäre Hilfslöcher (49) umfasst;
- jedes primäre Hilfsloch (49) und sekundäre Hilfsloch (66, 67, 68) so angeordnet ist, dass, wenn das primäre Referenzloch (48) mit einem der sekundären Referenzlöcher (66; 67; 68) übereinstimmt, jedes der primären Hilfslöcher (49) so konfiguriert ist, dass es mit einem der sekundären Hilfslöcher (66, 67, 68) übereinstimmt; und
- die Antriebsachswelle (20) für jedes primäre Hilfsloch (49) ein entsprechendes Hilfsbefestigungselement (44) umfasst, wobei jedes Hilfsbefestigungselement (44) durch eines der primären Hilfslöcher (49) und durch eines der sekundären Hilfslöcher (66, 67, 68) eingesetzt wird, das mit dem primären Hilfsloch (49) übereinstimmt, durch das das Hilfsbefestigungselement (44) eingesetzt wird, um das Gleiten der primären Halbwelle (41) relativ zur sekundären Halbwelle (42) weiterhin zu verhindern und dadurch die Gesamtlänge (TL) zu fixieren.

3. Antriebsachssystem (10) nach einem der Ansprüche 1 und 2, wobei die primäre Halbwelle (41) nur ein primäres Referenzloch (48) aufweist.

4. Antriebsachssystem (10) nach einem der Ansprüche 1 bis 3, wobei die primären radialen Elemente (50) eine Vielzahl von primären Keilverzahnungen darstellen und die sekundären radialen Elemente (70) eine Vielzahl von sekundären Keilverzahnungen darstellen, die eine zu den primären Keilverzahnungen komplementäre Form aufweisen, wobei sich die primären und sekundären Keilverzahnungen entlang der Wellenachse (T20) erstrecken und ineinandergreifen, um eine Drehung der primären Halbwelle (41) relativ zur sekundären Halbwelle (42) um die Wellenachse (T20) zu verhindern, während ein Gleiten der primären Halbwelle (41) relativ zur sekundären Halbwelle (42) entlang der Wellenachse ermöglicht wird.

5. Antriebsachssystem (10) nach einem der Ansprüche 1 bis 4, umfassend eine Vielzahl von Antriebsachswellen (20), wobei die primären Halbwellen (41) der Antriebsachswellen (20) untereinander identisch sind, und wobei die sekundären Halbwellen (42) der Antriebsachswellen (20) untereinander identisch sind.

6. Antriebsachssystem (10) nach Anspruch 5, wobei jede Antriebsachswelle (20) ebenso viele sekundäre Referenzlöcher (56, 57, 58) umfasst, wie das Antriebsachssystem (10) Antriebsachswellen (20) umfasst.

7. Antriebsachssystem (10) nach einem der Ansprüche 5 und 6, wobei bei jeder Antriebsachswelle (20):
- das primäre Referenzloch (48) mit einem der sekundären Referenzlöcher (56, 57, 58) übereinstimmt; und
- die Position der primären Halbwelle (41) relativ zur sekundären Halbwelle (42) für jede Antriebsachse (20) unterschiedlich ist, sodass die Gesamtlänge (TL) jeder Antriebsachse (20) unterschiedlich ist.

8. Antriebsachssystem (10) nach einem der Ansprüche 1 bis 7, wobei die primäre Halbwelle (41) eine Außenhalbwelle mit einer Außenfläche (47) ist, die die primären radialen Elemente (50) bildet, und die sekundäre Halbwelle (42) eine Innenhalbwelle ist, wobei eine Innenfläche (55) der Innenhalbwelle einen hohlen Abschnitt (59) begrenzt, der sich entlang der Außenhalbwelle erstreckt, wobei die Innenfläche (55) die sekundären radialen Elemente (70) bildet und die Außenfläche (47) aufnimmt.

9. Antriebsachssystem (10) nach einem der Ansprüche 1 bis 8, wobei das Befestigungselement (44) ein Spannstift ist, der in das primäre Referenzloch (48) und das damit übereinstimmende sekundäre Referenzloch (56, 57, 58), durch das das Befestigungselement (44) eingesetzt wird, eingepresst ist.

10. Antriebsachssystem (10) nach einem der Ansprüche 1 bis 9, wobei das Antriebsachssystem (10) ein hinteres und/oder ein vorderes Antriebsachssystem (10) ist.

11. Antriebsachssystem (10) nach einem der Ansprüche 1 bis 10, ferner umfassend zwei Antriebsachsen (11, 12) zum Bilden eines hinteren Tandem-Antriebsachssystems (10).

12. Antriebsachssystem (10) nach einem der Ansprüche 1 bis 11, wobei jede Antriebsachse (11, 12) ferner Folgendes umfasst:
- ein Differenzial (24), das dazu ausgelegt ist, von einer Antriebswelle angetrieben zu werden, wobei jede Antriebsachswelle (20) ein Differenzialgetriebeende (201) umfasst, wobei das Differenzial (24) die Antriebsachswelle (20) relativ zum Antriebsachsgehäuse (15; 25) über das Differentialzahnradende (201) um die Wellenachse (T20) in Drehung versetzt; und
- eine Radnabenbaugruppe (23, 33), die dazu ausgelegt ist, einen Antrieb (5) relativ zum Antriebsachsgehäuse (15, 25) um die Wellenachse (T20) in Drehung zu versetzen, wobei jede Antriebsachswelle (20) ferner ein Radnabenende (202) umfasst, die Antriebsachswelle (20) die Radnabenbaugruppe (23, 33) relativ zum Antriebsachsgehäuse (15, 25) über das Radnabenende (202) um die Wellenachse (T20) in Drehung versetzt, wobei die primären und sekundären Halbwellen (41, 42) das Radnabenende (202) mit dem Differentialzahnradende (201) verbinden.

13. Antriebsachssystem (10) nach Anspruch 2, wobei die primären Hilfslöcher (49) in einer Ebene angeordnet sind, die die Wellenachse (T20) umfasst.

14. Schwerlastfahrzeug (1), umfassend ein Antriebsachssystem (10) nach einem der Ansprüche 1 bis 13.

15. Verfahren zum Herstellen eines Antriebsachssystems (10) nach einem der Ansprüche 1 bis 13, umfassend:
- Verschieben der primären Halbwelle (41) relativ zur sekundären Halbwelle (42) entlang der Wellenachse (T20), bis das primäre Referenzloch (48) mit einem der sekundären Referenzlöcher (56, 57, 58) übereinstimmt und die gewünschte Gesamtlänge (TL) erreicht ist; und
- Einsetzen des Befestigungselements (44) in das primäre Referenzloch (48) und das übereinstimmende sekundäre Referenzloch (56, 57, 58), um die erreichte Gesamtlänge (TL) zu fixieren.

## Revendications

1. Système d'essieu moteur (10) pour un véhicule utilitaire lourd (1), comprenant au moins un essieu moteur (11 ; 12), ledit au moins un essieu moteur (11 ; 12) comprenant un carter d'essieu moteur (15 ; 25) et au moins un arbre d'essieu moteur (20), s'étendant le long d'un axe d'arbre (T20), l'arbre d'essieu moteur (20) présentant une longueur totale (TL) mesurée le long de l'axe d'arbre (T20), **caractérisé en ce que** l'arbre d'essieu moteur (20) comprend :
- un demi-arbre primaire (41), s'étendant le long de l'axe de l'arbre (T20) et comprenant des éléments radiaux primaires (50) et un trou de référence primaire (48), s'étendant radialement par rapport à l'axe de l'arbre ;
- un demi-arbre secondaire (42), s'étendant le long de l'axe de l'arbre (T20) et comprenant :
∘ des trous de référence secondaires (56, 57, 58), décalés les uns par rapport aux autres le long de l'axe de l'arbre (T20), chaque trou de référence secondaire (56, 57, 58) s'étendant radialement par rapport à l'axe de l'arbre (T20), et
∘ des éléments radiaux secondaires (70), les éléments radiaux primaires et secondaires (50, 70) étant reçus l'un dans l'autre pour :
▪ empêcher la rotation du demi-arbre primaire (41) par rapport au demi-arbre secondaire (42) autour de l'axe de l'arbre (T20), et
▪ permettre le glissement du demi-arbre primaire (41) par rapport au demi-arbre secondaire (42) le long de l'axe de l'arbre (T20), de manière à faire varier la longueur totale (TL) et à ce que, pour des positions données du demi-arbre primaire (41) par rapport au demi-arbre secondaire (42), le trou de référence primaire (48) coïncide avec l'un des trous de référence secondaires (56 ; 57 ; 58), et
- une attache (43), insérée dans le trou de référence primaire (48) et dans l'un des trous de référence secondaires (56, 57, 58) qui coïncide avec le trou de référence primaire (48) à travers lequel l'attache (44) est insérée, pour empêcher le glissement du demi-arbre primaire (41) par rapport au demi-arbre secondaire (42) et fixer ainsi la longueur totale (TL).

2. Système d'essieu moteur (10) selon la revendication 1, dans lequel :
- le demi-arbre primaire (41) comprend au moins un trou auxiliaire primaire (49) ;
- pour chaque trou de référence secondaire (56, 57, 58), le demi-arbre secondaire (42) comporte autant de trous auxiliaires secondaires (66, 67, 68) que le demi-arbre primaire (41) comporte de trous auxiliaires primaires (49) ;
- chaque trou auxiliaire primaire (49) et chaque trou auxiliaire secondaire (66, 67, 68) sont disposés de telle sorte que, lorsque le trou de référence primaire (48) coïncide avec l'un des trous de référence secondaires (66 ; 67 ; 68), chacun des trous auxiliaires primaires (49) est configuré pour coïncider avec l'un des trous auxiliaires secondaires (66, 67, 68) ; et
- l'arbre de l'essieu moteur (20) comprend une attache auxiliaire respective (44) pour chaque trou auxiliaire primaire (49), chaque attache auxiliaire (44) étant insérée à travers l'un des trous auxiliaires primaires (49) et à travers l'un des trous auxiliaires secondaires (66, 67, 68) coïncidant avec le trou auxiliaire primaire (49) à travers lequel l'attache auxiliaire (44) est insérée, afin d'empêcher davantage le glissement du demi-arbre primaire (41) par rapport au demi-arbre secondaire (42) et de fixer ainsi la longueur totale (TL).

3. Système d'essieu moteur (10) selon l'une des revendications 1 et 2, dans lequel le demi-arbre primaire (41) ne possède qu'un seul trou de référence primaire (48).

4. Système d'essieu moteur (10) selon l'une quelconque des revendications 1 à 3, dans lequel les éléments radiaux primaires (50) sont une pluralité de cannelures primaires et les éléments radiaux secondaires (70) sont une pluralité de cannelures secondaires, présentant une forme complémentaire aux cannelures primaires, les cannelures primaires et secondaires s'étendant le long de l'axe de l'arbre (T20) et s'emboîtant pour empêcher la rotation du demi-arbre primaire (41) par rapport au demi-arbre secondaire (42) autour de l'axe de l'arbre (T20) tout en permettant le glissement du demi-arbre primaire (41) par rapport au demi-arbre secondaire (42) le long de l'axe de l'arbre.

5. Système d'essieu moteur (10) selon l'une quelconque des revendications 1 à 4, comprenant une pluralité d'arbres d'essieu moteur (20), dans lequel les demi-arbres primaires (41) des arbres d'essieu moteur (20) sont identiques les uns aux autres, et dans lequel les demi-arbres secondaires (42) des arbres d'essieu moteur (20) sont identiques les uns aux autres.

6. Système d'essieu moteur (10) selon la revendication 5, dans lequel chaque arbre d'essieu moteur (20) comporte autant de trous de référence secondaires (56, 57, 58) que le système d'essieu moteur (10) comporte d'arbres d'essieu moteur (20).

7. Système d'essieu moteur (10) selon l'une des revendications 5 et 6, dans lequel, pour chaque arbre d'essieu moteur (20) :
- le trou de référence primaire (48) coïncide avec l'un des trous de référence secondaires (56, 57, 58) ; et
- la position du demi-arbre primaire (41) par rapport au demi-arbre secondaire (42) est différente pour chaque arbre d'essieu moteur (20), de sorte que la longueur totale (TL) de chaque arbre d'essieu moteur (20) est différente.

8. Système d'essieu moteur (10) selon l'une quelconque des revendications 1 à 7, dans lequel le demi-arbre primaire (41) est un demi-arbre mâle présentant une surface extérieure (47) formant les éléments radiaux primaires (50) et le demi-arbre secondaire (42) est un demi-arbre femelle, une surface intérieure (55) du demi-arbre femelle délimitant une partie creuse (59) s'étendant le long du demi-arbre femelle, la surface intérieure (55) formant les éléments radiaux secondaires (70) et recevant la surface extérieure (47).

9. Système d'essieu moteur (10) selon l'une des revendications 1 à 8, dans lequel l'attache (44) est un goujon, monté à la presse dans le trou de référence primaire (48) et le trou de référence secondaire coïncidant (56, 57, 58) à travers lequel ladite attache (44) est insérée.

10. Système d'essieu moteur (10) selon l'une des revendications 1 à 9, dans lequel le système d'essieu moteur (10) est un système d'essieu moteur arrière et/ou avant (10).

11. Système d'essieu moteur (10) selon l'une des revendications 1 à 10, comprenant en outre deux essieux moteurs (11, 12) pour former un système d'essieu moteur arrière tandem (10).

12. Système d'essieu moteur (10) selon l'une des revendications 1 à 11, dans lequel chaque essieu moteur (11, 12) comprend en outre :
- un différentiel (24), adapté pour être entraîné par un arbre moteur, dans lequel chaque arbre d'essieu moteur (20) comprend une extrémité d'engrenage différentiel (201), le différentiel (24) entraînant l'arbre d'essieu moteur (20) en rotation autour de l'axe de l'arbre (T20), par rapport au carter de l'essieu moteur (15 ; 25), via l'extrémité d'engrenage différentiel (201) ; et
- un assemblage de moyeu de roue (23, 33), adapté pour entraîner une transmission (5) en rotation autour de l'axe de l'arbre (T20) par rapport au boîtier de l'essieu moteur (15, 25), dans lequel chaque arbre d'essieu moteur (20) comprend en outre une extrémité de moyeu de roue (202), l'arbre d'essieu moteur (20) entraînant l'assemblage de moyeu de roue (23, 33) en rotation autour de l'axe de l'arbre (T20), par rapport au carter de l'essieu moteur (15, 25), via l'extrémité du moyeu de roue (202), les demi-arbres primaire et secondaire (41, 42) reliant l'extrémité du moyeu de roue (202) à l'extrémité de l'engrenage différentiel (201).

13. Système d'essieu moteur (10) selon la revendication 2, dans lequel les trous auxiliaires primaires (49) sont disposés dans un plan comprenant l'axe de l'arbre (T20).

14. Véhicule utilitaire lourd (1), comprenant un système d'essieu moteur (10) selon l'une quelconque des revendications 1 à 13.

15. Procédé de fabrication d'un système d'essieu moteur (10) selon l'une quelconque des revendications 1 à 13, comprenant :
- le glissement du demi-arbre primaire (41) par rapport au demi-arbre secondaire (42) le long de l'axe de l'arbre (T20), jusqu'à ce que le trou de référence primaire (48) coïncide avec l'un des trous de référence secondaires (56, 57, 58) et que la longueur totale souhaitée (TL) soit atteinte ; et
- l'insertion de l'élément de fixation (44) dans le trou de référence primaire (48) et le trou de référence secondaire coïncidant (56, 57, 58) pour fixer la longueur totale (TL) obtenue.
